# EUROPEAN PATENT APPLICATION

(11) **EP 4 815 080 A1**
(43) Date of publication of application: **30.09.2026**
(21) Application number: 25892253.3
(22) Date of filing: 04.08.2025
(51) Int. Cl.: H01M 10/04, H01M 10/42

(54) **BATTERY CELL MANUFACTURING APPARATUS AND BATTERY CELL MANUFACTURING METHOD FOR IMPROVING WETTING PROPERTY OF ELECTROLYTE**

(30) Priority: 12.11.2024 KR 20240159888
(71) Applicant: LG Energy Solution, Ltd., Seoul 07335 (KR)
(72) Inventor: KWON, Dae Hyeoung, Daejeon 34122 (KR)
(74) Representative: Goddar, Heinz J.
(86) International application number: PCT/KR2025/011619
(87) International publication number: WO 2026/106032

(57) **Abstract**

A battery cell manufacturing apparatus according to an embodiment of the present disclosure comprises: a tray that includes a bottom plate and first and second rib sets located on both sides of the bottom plate, a cell loader that allows a plurality of battery cells to be loaded onto the bottom plate between the first rib set and the second rib set, and a plurality of elastic partition members located between a first rib and a second rib that are located so as to correspond to each other among a plurality of first ribs included in the first rib set and a plurality of second ribs included in the second rib set, wherein the elastic partition members press the battery cells under a state where they are loaded onto the bottom plate.

## Description

### [TECHNICAL FIELD]

### Cross Citation with Related Application(s)

This application claims priority to and the benefit of Korean Patent Application No. 10-2024-0159888, filed on November 12, 2024, the disclosure of which is incorporated herein by reference in its entirety.

The present disclosure relate to a battery cell manufacturing apparatus and a battery cell manufacturing method, and more specifically, to a battery cell manufacturing apparatus and a battery cell manufacturing method that enable rapid and efficient wetting of an electrolyte into electrodes.

### [BACKGROUND]

As the demands for portable electronic products such as notebooks, video cameras and cellular phones are rapidly increased in these days, and development of electric vehicles, energy storage batteries, robots, satellites, etc. is under active progress, numerous studies are being made on secondary batteries being used as the driving power source.

Such a secondary battery includes, for example, nickel-cadmium battery, nickel hydrogen battery, nickel zinc battery, lithium secondary battery, and the like. Since the lithium secondary battery among them has the advantages in that it has almost no memory effect compared to nickel-based secondary battery, and thus, can be charged and discharged freely, and have very low self-discharge rate, high operating voltage, and high energy density per unit weight, it is widely used in the field of advanced electronic devices.

Based on the shape of a battery case, a secondary battery may be classified into a cylindrical battery where an electrode assembly is mounted in a cylindrical metal can, a prismatic battery where an electrode assembly is mounted in a prismatic metal can, or a pouch-shaped battery where an electrode assembly is mounted in a pouch-shaped case formed of an aluminum laminate sheet.

The electrode assembly mounted in the battery case is a power generating element, having a positive electrode/separator/negative electrode stack structure, which can be charged and discharged, and the electrode assembly is classified into a jelly-roll type, a stacked type and a stacked/folded type. The jelly-roll type electrode assembly is configured to have a structure in which a long sheet type positive electrode and a long sheet type negative electrode, to which active materials are applied, are wound under a state where a separator is interposed between the positive electrode and the negative electrode, the a stacked type electrode assembly is configured to have a structure in which a plurality of positive electrodes having a predetermined size and a plurality of negative electrodes having a predetermined size are sequentially stacked in a state in which separators are interposed between the positive electrodes and the negative electrodes, and the stacked/folded type electrode assembly is a combination of the a jelly-roll type electrode assembly and the stacked type electrode assembly.

To ensure that secondary batteries including the electrode assemblies have high capacity and high energy density while maintaining long lifetime, the electrode assemblies interposed within the battery must be completely wetted in the electrolyte so that electrode reactions between the electrodes occur actively. If the electrode assembly is incompletely wetted with the electrolyte, the reaction between electrodes does not proceed smoothly, leading to an increase in the resistance and rapid deterioration in output characteristics and battery capacity, which may result in deterioration of battery performance and shortening of the lifetime. Additionally, due to high resistance, the battery may be exposed to the risk of degradation or explosive phenomena occurring.

Therefore, various methods for enhancing the wettability of electrode assemblies are being researched in order to improve the performance and safety of secondary batteries.

### [DETAILED DESCRIPTION OF THE INVENTION[]

### [Technical Problem]

It is an object of the present disclosure to provide a battery cell manufacturing apparatus and a battery cell manufacturing method that enable rapid and efficient wetting of an electrolyte into electrodes.

However, the technical objects to be solved by embodiments of the present disclosure are not limited to the above-described objects, and can be variously expanded within the scope of the technical idea included in the present disclosure.

### [Technical Solution]

In an illustrative aspect of the present disclosure, provided is a battery cell manufacturing apparatus, comprising: a tray that includes a bottom plate and first and second rib sets located on both sides of the bottom plate, a cell loader that allows a plurality of battery cells to be loaded onto the bottom plate between the first rib set and the second rib set, and a plurality of elastic partition members located between the first ribs and the second ribs that are located so as to correspond to each other among the plurality of first ribs included in the first rib set and the plurality of second ribs included in the second rib set, wherein the elastic partition members press the battery cells under a state where they are loaded onto the bottom plate.

In an embodiment, an electrolyte may be included in the battery cell, and when the elastic partition member presses the battery cell, the level of the electrolyte may rise to be high in a direction opposite to gravity.

In an embodiment, the battery cell may be loaded on the bottom plate so that the elastic partition member overlaps a front surface of the main body part of the battery cell.

In an embodiment, before the battery cells are loaded onto the bottom plate, the plurality of elastic partition members may be located between the first rib set and the second rib set, and the interval between the elastic partition members adjacent to each other among the plurality of elastic partition members may be smaller than the thickness of the battery cells before being loaded onto the bottom plate.

In an embodiment, the battery cells are moved in the direction of gravity by the battery loader, and loaded between the elastic partition members adjacent to each other, wherein in such a process that the battery cells are loaded between the elastic partition members, pressure may be applied from the battery cells to the elastic partition members, and after the battery cells are loaded, pressure may be applied to the battery cells due to the elastic recovery of the elastic partition members.

In an embodiment, when the battery cell is loaded on the bottom plate, the battery cells may be in contact with the elastic partition member, and the battery cells may be arranged so as to be spaced apart at a prescribed interval.

In an embodiment, the elastic partition member may press the main body of the battery cell in a thickness direction of the battery cell.

In an embodiment, before the battery cell is loaded onto the bottom plate, the elastic partition member may enter the loading space of the battery cell.

In an embodiment, the battery cell may use a pouch-type battery cell.

In an embodiment, the upper end part of the elastic partition member may have a chamfered structure.

In an embodiment, the upper part and the lower part of the elastic partition member may have a first thickness and a second thickness, respectively, with the first thickness being smaller than the second thickness.

In an embodiment, the battery cell manufacturing apparatus may further comprise an external frame on which the tray is mounted.

In another illustrative aspect of the present disclosure, provided is a battery cell manufacturing method, comprising: forming a plurality of elastic partition members, spaced apart at a prescribed interval, on a tray including a bottom plate and first and second rib sets located on both sides of the bottom plate, loading battery cells into cell insert parts formed in spaces between elastic partition members adjacent to each other among the plurality of elastic partition members, and performing a pre-aging process under a state where the elastic partition members press the battery cells.

In an embodiment, under a state where the elastic partition member presses the battery cell, the level of the electrolyte included in the battery cell may rise to be high in a direction opposite to gravity.

In an embodiment, the prescribed interval between the plurality of elastic partition members may be smaller than the thickness of the battery cell before being loaded into the cell insertion part, and when the battery cell is inserted into the cell insertion part, the elastic partition member may receive pressure from the battery cell to decrease in thickness, and the elastic partition member may press the battery cell while returning to its original state due to the elasticity.

In an embodiment, the battery cell manufacturing method may further comprise performing a pre-aging process under a state where the elastic partition member presses the main body of the battery cell in the thickness direction of the battery cell.

In an embodiment, when the elastic partition member presses the main body of the battery cell, the elastic partition member may be in surface contact with the main body of the battery cell.

In an embodiment, the battery cell may comprise an electrode assembly including a positive electrode, a separator, and a negative electrode, and a cell case that packages the electrode assembly.

### [Advantageous Effects]

According to specific embodiments, during the progression of the pre-aging process, it is possible to apply pressure to the surface of the battery cell through a high-elasticity member within the tray, resulting in a liquid level rising effect. Thereby, it is possible to quickly and efficiently wet an electrolyte into electrodes within a specified period of time.

The effects of the present disclosure are not limited to the effects mentioned above and additional other effects not mentioned above will be clearly understood from the description of the appended claims by those skilled in the art.

### [BRIEF DESCRIPTION OF THE DRAWINGS]

FIG. 1 is a perspective view illustrating a tray of a battery cell manufacturing apparatus according to an embodiment of the present disclosure.
FIG. 2 is a perspective view illustrating a rib structure included in the tray of FIG. 1.
FIG. 3 is a front view of the rib structure of FIG. 2.
FIG. 4 is a perspective view illustrating an external tray for moving the tray of FIG. 1 under the state where a plurality of battery cells are loaded on the tray.
FIG. 5 is a perspective view illustrating a state in which the tray of FIG. 1 and the external tray of FIG. 2 are combined.
FIG. 6 is a perspective view illustrating battery cells loaded on the tray of FIG. 5.
FIG. 7 is a perspective view illustrating a state in which an elastic partition member according to the present embodiment is arranged on the tray of FIG. 1.
FIG. 8 is an exploded perspective view illustrating a method of coupling an elastic partition member and a rib according to an embodiment of the present disclosure.
FIG. 9 is a plan view illustrating a battery cell loaded on a battery cell manufacturing apparatus according to an embodiment of the present disclosure.
FIG. 10 is a diagram illustrating a state in which a battery cell is inserted between the elastic partition members adjacent to each other using a battery cell manufacturing apparatus according to an embodiment of the present disclosure.
FIG. 11 is a diagram illustrating a state in which a battery cell is inserted between the elastic partition members adjacent to each other using a battery cell manufacturing apparatus according to another embodiment of the present disclosure.
FIG. 12 is a diagram illustrating the structure of an elastic partition member in a battery cell manufacturing apparatus according to another embodiment of the present disclosure.
FIG. 13 is a flowchart illustrating a battery cell manufacturing method according to another embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

To clearly describe the present inventive concept, parts that are irrelevant to the description are omitted, and like reference numerals designate same or like elements throughout the description.

Further, since sizes and thicknesses of each element shown in the drawings are arbitrarily given for better understanding and ease of description, the present inventive concept is not limited to the illustrated sizes and thicknesses. In the drawings, the thicknesses of layers, regions, etc. are exaggerated for clarity. In the drawings, for better understanding and ease of description, the thicknesses of some layers and areas are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

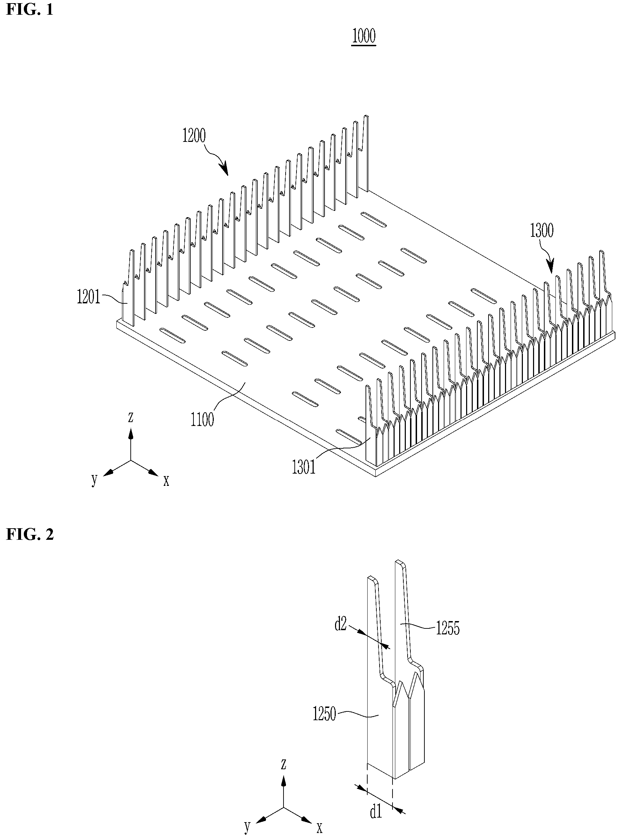

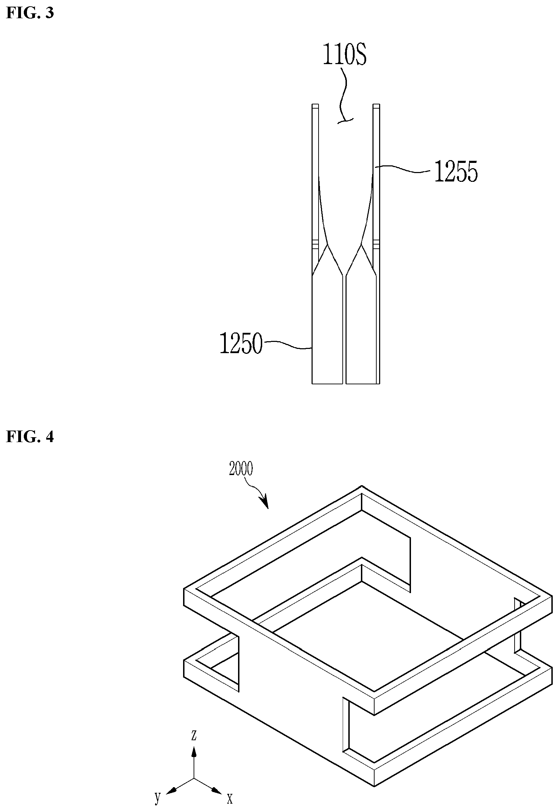

FIG. 1 is a perspective view illustrating a tray of a battery cell manufacturing apparatus according to an embodiment of the present disclosure. FIG. 2 is a perspective view illustrating a rib structure included in the tray of FIG. 1. FIG. 3 is a front view of the rib structure of FIG. 2.

Referring to FIG. 1, a battery cell manufacturing apparatus according to an embodiment of the present disclosure includes a tray 1000. After completion of the packaging process and before degassing so as to form a battery cell that comprises an electrode assembly including a positive electrode, a separator, and a negative electrode, and a cell case that packages the electrode assembly, a pre-aging process may be carried out to ensure enough wetting of the electrolyte. The tray 1000 according to the present embodiment may serve to maintain a state in which a plurality of battery cells are stacked in order to progress the pre-aging process.

The pre-aging process may be a process in which, after a packaging process of the battery cells, the battery cells are stored for several days in a warehouse maintained at approximately 23 degrees Celsius under the state where the cells are loaded vertically on activation trays to realize enough wetting of the electrolyte.

The tray 1000 according to the present embodiment comprises a bottom plate 1100 and first and second rib sets 1200, 1300 located on both sides of the bottom plate 1100. The first rib set 1200 comprises a plurality of first ribs 1201 spaced apart at a prescribed interval, and the second rib set 1300 comprises a plurality of second ribs 1301 spaced apart at a prescribed interval.

Referring to FIGS. 1 to 3, the first rib 1201 and the second rib 1301 each have a structure that protrudes in a direction opposite to gravity (the z-axis) from both sides of the bottom plate 1100, and may include a first portion 1250 on which the electrode leads of the battery cells are mounted, and a second portion 1255 extending upward from the first portion 1250. In this case, the first portion 1250 may have a first width d1, and the second portion 1255 may have a second width d2. The first width d1 may be larger than the second width d2. The first width d1 and the second width d2 may be widths defined along the direction (x-axis) in which the electrode leads of the battery cells protrude when the battery cells are loaded onto the tray 1000.

As illustrated in FIG. 3, a cell insertion part 110S may be formed between mutually adjacent ribs 1201 and 1301 so that the battery cells are stacked and aligned. The cell insertion part 110S may be a space where the ends of the battery cells are inserted vertically (-z-axis) into the first and second ribs 1201, 1301. A gap is formed between adjacent ribs 1201, 1301 while being located below the cell insertion part 110S, so that the electrode leads of the battery cell may be seated in the gap.

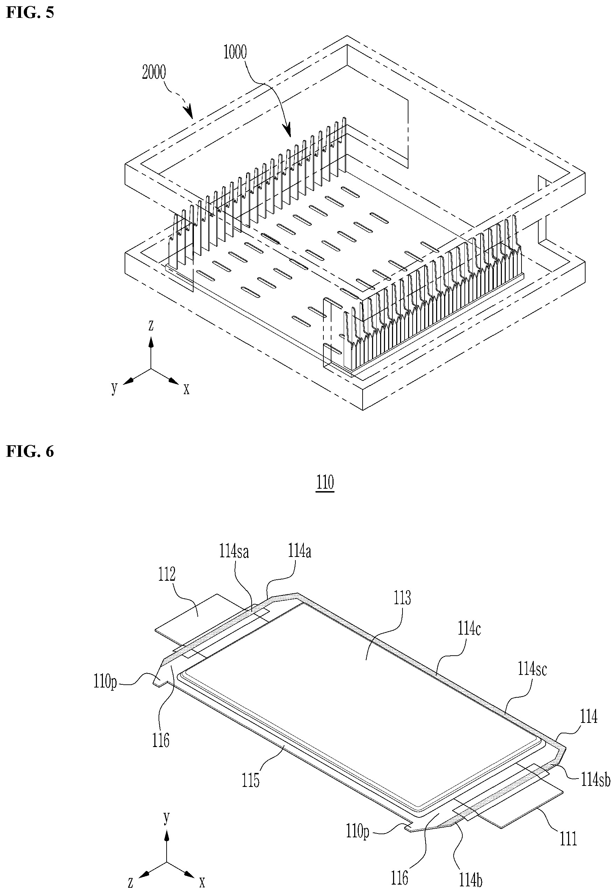

FIG. 4 is a perspective view illustrating an external tray for moving the tray of FIG. 1 under the state where a plurality of battery cells are loaded on the tray. FIG. 5 is a perspective view illustrating a state in which the tray of FIG. 1 and the external tray of FIG. 2 are combined.

Referring to FIGS. 4 and 5, the external tray 2000 may serve as an external box for transporting the tray 1000 loaded with the battery cells to a required location, such as a chamber for performing a pre-aging process The tray 1000, in which a plurality of battery cells 110 are stacked, may be housed on the external tray 2000. The external tray 2000 can have a frame that comprises an upper frame, a lower frame, and side frames connecting them. The tray 1000 can be housed within the frame. The external tray 2000 may serve to fix the tray 1000 onto which the battery cells are directly loaded. That is, the tray 1000 may be assembled to the external tray 2000, and the battery cells may be mounted on the tray 1000.

As described above, the battery cell 110 loaded onto the tray 1000 according to the present embodiment may comprise an electrode assembly that includes a positive electrode, a separator, and a negative electrode, and a cell case that packages the electrode assembly. The battery cell 110 will now be described in detail with reference to FIG. 6.

FIG. 6 is a perspective view illustrating battery cells loaded on the tray of FIG. 5.

Referring to FIG. 6, the battery cell 110 is preferably a pouch-type battery cell. For example, the battery cell 110 according to the present embodiment has a structure in which two electrode leads 111, 112 face each other and protrude from one end 114a and the other end 114b of the cell body 113, respectively. More specifically, the electrode leads 111, 112 are connected to an electrode assembly (not shown) and protrude from the electrode assembly (not shown) to the outside of the battery cell 110.

Meanwhile, the battery cell 110 can be produced by adhering both end parts 114a and 114b of a cell case 114 and one side part 114c connecting them in a state in which an electrode assembly (not shown) is housed in a pouch case 114. In other words, the battery cell 110 according to the present embodiment has a total of three sealing parts 114sa, 114sb, 114sc, wherein the sealing parts 114sa, 114sb, 114sc have a structure that is sealed by a method such as fusion, and the remaining other one side part may be formed of a connecting part 115. The cell case 114 may be made of a laminate sheet including a resin layer and a metal layer,

Further, the connecting part 115 may extend long along one edge of the battery cell 110, and a protrusion part 110p of the battery cell 110 called a bat-ear may be formed at the end part of the connecting part 115. Further, a terrace part 116 may be formed between the electrode leads 111, 112 and the cell body 113 while the cell case 114 is sealed with the protruding electrode leads 111, 112 interposed between them. That is, the battery cell 110 includes a terrace part 116 that is extended and formed from the cell case 114 in the direction in which the electrode leads 111, 112 protrude.

According to the present embodiment, an upper end part and a lower end part of the battery cell 110 may correspond to one side part 114c and a connecting part 115 for connecting both end parts 114a, 114b of the cell case 114, respectively. The upper end part and the lower end part of the battery cell 110 may be portions that are subjected to cell edge cooling, as described below.

The battery cells 110 loaded on the tray 1000 according to the present embodiment include an electrolyte. Under the state where the battery cells 110 are loaded on the tray 1000, the electrolyte may hang down due to its gravity. Therefore, if pre-aging proceeds in this state, the wetting of the electrolyte may not be carried out efficiently. In order to efficiently wet the battery cells 110 with the electrolyte, the tray 1000 according to the present embodiment includes an elastic partition member, which will be described later.

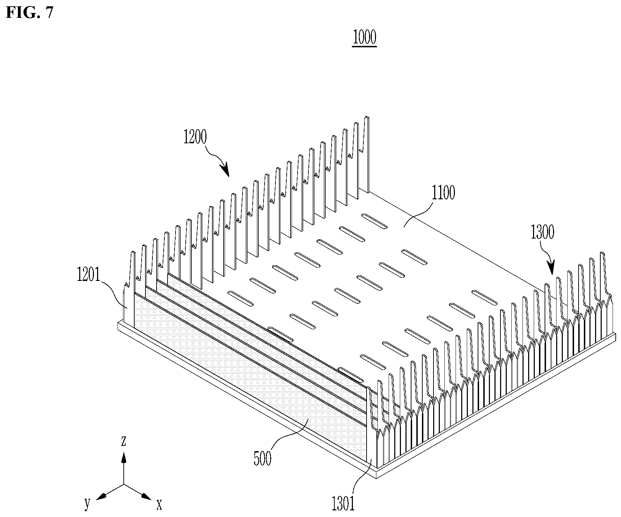

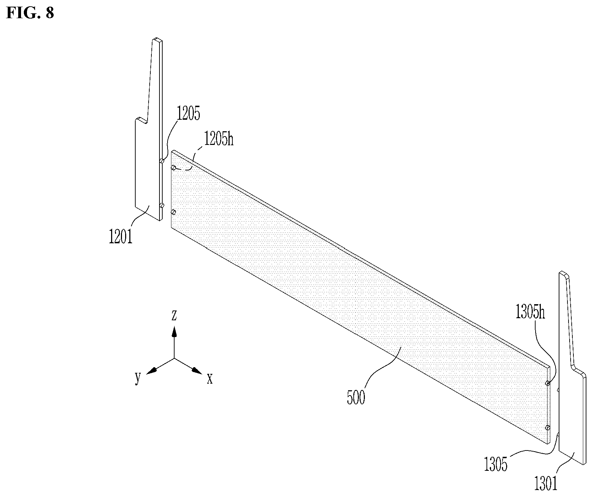

Although not illustrated in FIG. 5, the elastic partition member is located between the battery cells 110 adjacent to each other among the plurality of battery cells 110 arranged to be spaced apart at prescribed intervals. The elastic partition members according to the present embodiment will be described with reference to FIGS. 7 and 8.

FIG. 7 is a perspective view illustrating a state in which an elastic partition member according to the present embodiment is arranged on the tray of FIG. 1. FIG. 8 is an exploded perspective view illustrating a method of coupling an elastic partition member and a rib according to an embodiment of the present disclosure.

Referring to FIG. 7, in the tray 1000 according to the present embodiment, a plurality of elastic partition members 500 are arranged between the first rib set 1200 and the second rib set 1300. In this case, the plurality of elastic partition members 500 may be arranged so that the individual elastic partition members 500 are spaced apart at prescribed intervals. The elastic partition member 500 according to the present embodiment is located between the first rib 1201 and the second rib 1301, which are disposed to correspond to each other.

Referring to FIG. 8, in order to ensure that the elastic partition member 500 is fixed to the tray 1000, the elastic partition member 500 may be coupled with protrusions 1205 formed on the first and second ribs 1201, 1301. The tray 1000 according to the present embodiment may have a coupling structure in which holes 1205h are formed on both side surfaces of the elastic partition member 500 to allow the elastic partition member 500 to be coupled with the protrusions 1205, and the protrusions 1205 are inserted into the holes 1205h. Therefore, a plurality of elastic partition members 500 may be stably located between the first rib set 1200 and the second rib set 1300. The protrusions 1205 and the holes 1205h may be formed one by one or in plural numbers, respectively.

The elastic partition member 500 according to the present embodiment may be made of a sponge material. Due to the softness of the sponge material, there is almost no external damage when inserting and/or pressing the battery cell 110.

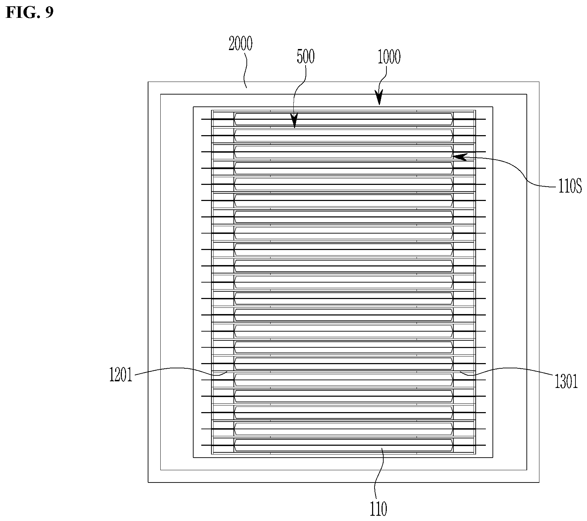

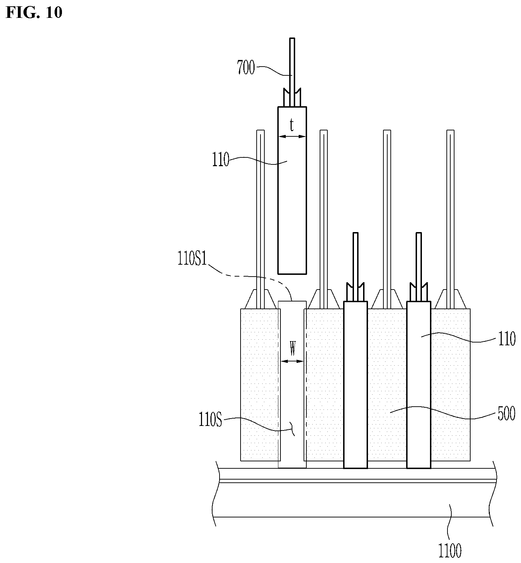

FIG. 9 is a plan view illustrating a battery cell loaded on a battery cell manufacturing apparatus according to an embodiment of the present disclosure. FIG. 10 is a diagram illustrating a state in which a battery cell is inserted between the elastic partition members adjacent to each other using a battery cell manufacturing apparatus according to an embodiment of the present disclosure.

Referring to FIGS. 5, 7, 9, and 10, by using the battery cell manufacturing apparatus according to the present embodiment, the battery cells 110 can be moved in the direction of gravity by the battery loader 700, and the battery cells 110 can be stacked on the bottom plate 1100. At this time, the battery cells 110 may be loaded between the elastic partition members 500 adjacent to each other. In such a process that the battery cells 110 are loaded between the elastic partition members 500, pressure can be applied from the battery cells 110 to the elastic partition members 500. After the battery cells 110 are loaded between the elastic partition members 500, pressure can be applied to the battery cells 110 due to the elastic recovery of the elastic partition members 500. At this time, the elastic partition members 500 can press the main body of the battery cells 110 in the thickness direction of the battery cells 110. Here, the main body of the battery cell 110 may correspond to the cell body 113, with reference to the contents described in FIG. 6. In FIG. 6, the cell body 113 may overlap with a stack cell in which a positive electrode, a separator, and a negative electrode are stacked. According to the present embodiment, the main body of the battery cell 110 is occupied by the battery cell over most of its area, and the wettability of the electrolyte can be enhanced by pressing the entire body area of the battery cell 110.

As illustrated in FIG. 10, when the battery cells 110 between adjacent elastic partition members 500 is stacked by using the battery cell manufacturing apparatus according to the present embodiment, the interval w between the elastic partition members 500 adjacent to each other may be smaller than the thickness t of the battery cells 110 before they are loaded onto the bottom plate. Therefore, when a battery cell 110 is inserted into a cell insertion part 110S between the elastic partition members 500 having a gap smaller than the thickness t of the battery cell 110, the battery cell 110 presses against the elastic partition member 500 during the loading process, and the elastic force of the elastic partition member 500 presses against the battery cell 110 after the battery cell 110 is loaded. At this time, the level of the electrolyte included in the battery cells 110 rises to be high in the direction opposite to gravity. Additionally, when a plurality of battery cells 110 are loaded between the elastic partition members 500 adjacent to each other, the battery cells 110 can be arranged so as to be spaced apart at a preset interval. Furthermore, the battery cells 110 and the elastic partition member 500 can be in contact with each other, and the elastic partition member 500 can overlap a front surface of the main body of the battery cell 110.

The battery cell manufacturing apparatus according to the present embodiment is preferably applied to a pouch-type battery cell. This is because, when considering raising the level of the electrolyte by pressing the battery cells 110 in the battery cell manufacturing apparatus, in the case of prismatic battery cells and the like, pressing itself becomes difficult due to the elastic partition member 500.

In FIG. 10, before the battery cell 110 is loaded onto the bottom plate 1100, the elastic partition member 500 may enter the loading space 110S1 of the battery cell 110. When the loading space 110S1 of the battery cell 110 has an interval wider than the width w of the cell insertion part 110S, and the elastic partition member 500 is not pressed as illustrated in FIG. 10, it may have substantially the same width as the battery cell thickness t before the battery cell 110 is loaded onto the bottom plate. The loading space 110S1 of the battery cell 110 may be a virtual space.

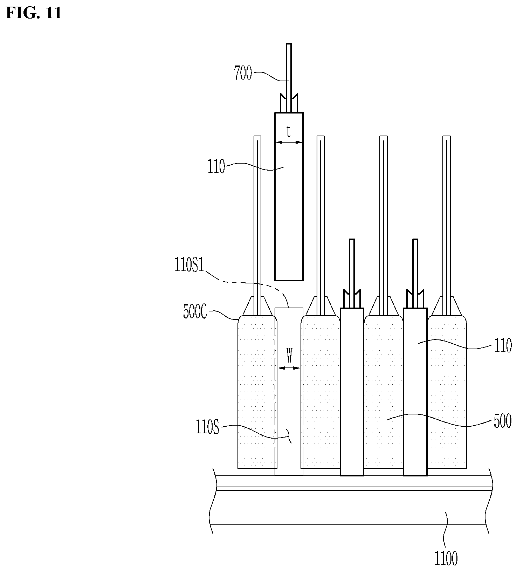

FIG. 11 is a diagram illustrating a state in which a battery cell is inserted between the elastic partition members adjacent to each other using a battery cell manufacturing apparatus according to another embodiment of the present disclosure.

Referring to FIGS. 7 and 11, the embodiment of FIG. 11 is substantially the same as that described in FIG. 10, however, the upper end part of the elastic partition member 500 may have a chamfered structure. In this way, the upper end part of the elastic partition member 500 has a chamfered structure 500C, which makes it easier for the battery cells 110 to enter the cell insertion part 110S and reduces the possibility of damage during loading of the battery cell 110. The chamfered structure 500C according to the present embodiment may be formed elongated along the x-axis direction of FIG. 7, or a plurality of chamfered structures may be formed to be spaced apart at prescribed intervals.

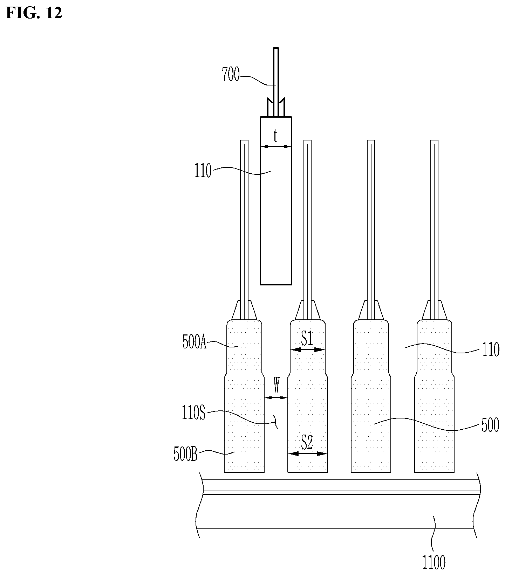

FIG. 12 is a diagram illustrating the structure of an elastic partition member in a battery cell manufacturing apparatus according to another embodiment of the present disclosure.

Referring to FIGS. 7 and 12, the embodiment of FIG. 11 is substantially the same as the embodiment described in FIG. 10, however, the upper part 500A and lower part 500B of the elastic partition member 500 have a first thickness S1 and a second thickness S2, respectively, and the first thickness S1 may be smaller than the second thickness S2. Due to this design of the elastic partition member 500, the force that pulls up the electrolyte concentrated in the lower part of the battery cell 110 in a direction opposite to gravity is greater than the force applied to the upper part of the battery cell 110, thereby improving uniformity of electrolyte wetting. For example, when a battery cell 110 is inserted into a cell insertion part 110S between the elastic partition members 500, the pressing force applied to the battery cell 110 from the lower part 500B of the elastic partition member 500 is stronger than the pressing force applied to the battery cell 110 from the upper part 500A of the elastic partition member 500. Therefore, by increasing the effect of gravity being offset at the lower part of the battery cell 110 where the electrolyte is more concentrated, it is possible to improve the uniformity of electrolyte wetting.

At this time, the interval between the upper parts 500A of the elastic partition members 500 adjacent to each other needs to be designed to be thinner than the thickness t of the battery cell 110. This is because, if the interval between the upper parts 500A of the elastic partition members 500 adjacent to each other is designed to be thicker than the thickness t of the battery cell 110, electrolyte wettability may deteriorate at the upper part of the battery cell 110.

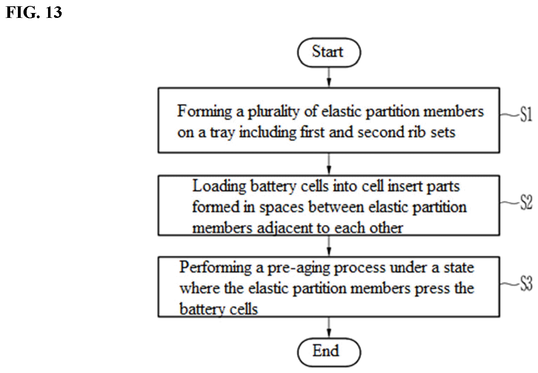

FIG. 13 is a flowchart illustrating a battery cell manufacturing method according to another embodiment of the present disclosure.

A battery cell manufacturing method according to another embodiment of the present disclosure comprises: a step (S1) of forming a plurality of elastic partition members, spaced apart at a prescribed interval, on a tray including a bottom plate and first and second rib sets located on both sides of the bottom plate, a step (S2) of loading battery cells into cell insert parts formed in spaces between elastic partition members adjacent to each other among the plurality of elastic partition members, and a step (S3) of performing a pre-aging process under a state where the elastic partition members press the battery cells. The tray includes a bottom plate and first and second rib sets located on both sides of the bottom plate.

The prescribed interval between the plurality of elastic partition members is smaller than the thickness of the battery cell before being loaded into the cell insertion part. When the battery cell is inserted into the cell insertion part, the elastic partition member receives pressure from the battery cell, thereby decreasing in thickness. The elastic partition member can press the battery cell while returning to its original shape due to the elasticity.

The battery cell manufacturing method according to the present embodiment further includes a step of performing a pre-aging process while pressing the main body of the battery cell in the thickness direction of the battery cell. During the progression of the pre-aging process, while the elastic partition member presses the battery cell, the level of the electrolyte included in the battery cell may rise to be high in a direction opposite to gravity. Therefore, the electrolyte can be quickly and efficiently wetted into the electrode included in the battery cell.

When the elastic partition member presses the main body of the battery cell, the elastic partition member can make surface contact with the main body of the battery cell.

Although preferred embodiments of the present disclosure have been described in detail above, the scope of the present disclosure is not limited thereto, and various modifications and improvements made by those skilled in the art using the basic concepts of the present invention, which are defined in the appended claims, also belong to the scope of the present disclosure.

### [Description of Reference Numerals]

110: battery cell
110S: cell insertion part
110S1: lading space
113: cell body
114: cell case
500: elastic partition member
1000: tray
1100: bottom plate
1200, 1300: first and second rib sets
1201, 1301:first and second ribs
1205: protrusion
1250, 1255: first and second portions

## Claims

1. A battery cell manufacturing apparatus, comprising:
a tray that includes a bottom plate and first and second rib sets located on both sides of the bottom plate,
a cell loader that allows a plurality of battery cells to be loaded onto the bottom plate between the first rib set and the second rib set, and
a plurality of elastic partition members located between a first rib and a second rib that are located so as to correspond to each other among a plurality of first ribs included in the first rib set and a plurality of second ribs included in the second rib set,
wherein the elastic partition members press the battery cells under a state where they are loaded onto the bottom plate.

2. The battery cell manufacturing apparatus of claim 1,
wherein an electrolyte is included in the battery cell, and when the elastic partition member presses the battery cell, the level of the electrolyte rises to be high in a direction opposite to gravity.

3. The battery cell manufacturing apparatus of claim 2,
wherein the battery cell is loaded on the bottom plate so that the elastic partition member overlaps a front surface of the main body part of the battery cell.

4. The battery cell manufacturing apparatus of claim 1,
wherein before the battery cells are loaded onto the bottom plate, the plurality of elastic partition members are located between the first rib set and the second rib set, and
the interval between the elastic partition members adjacent to each other among the plurality of elastic partition members is smaller than the thickness of the battery cells before being loaded onto the bottom plate.

5. The battery cell manufacturing apparatus of claim 4,
wherein the battery cells are moved in the direction of gravity by the battery loader, and loaded between the elastic partition members adjacent to each other, wherein in such a process that the battery cells are loaded between the elastic partition members, pressure is applied from the battery cells to the elastic partition members, and after the battery cells are loaded, pressure is applied to the battery cells due to the elastic recovery of the elastic partition members.

6. The battery cell manufacturing apparatus of claim 5,
wherein, when the battery cell is loaded on the bottom plate, the battery cells are in contact with the elastic partition member, and the battery cells are arranged so as to be spaced apart at a prescribed interval.

7. The battery cell manufacturing apparatus of claim 5,
wherein the elastic partition member presses the main body of the battery cell in a thickness direction of the battery cell.

8. The battery cell manufacturing apparatus of claim 1,
wherein, before the battery cell is loaded onto the bottom plate, the elastic partition member enters the loading space of the battery cell.

9. The battery cell manufacturing apparatus of claim 1,
wherein the battery cell uses a pouch-type battery cell.

10. The battery cell manufacturing apparatus of claim 1,
wherein the upper end part of the elastic partition member has a chamfered structure.

11. The battery cell manufacturing apparatus of claim 1,
wherein the upper part and the lower part of the elastic partition member have a first thickness and a second thickness, respectively, with the first thickness being smaller than the second thickness.

12. The battery cell manufacturing apparatus of claim 1,
further comprising an external frame on which the tray is mounted.

13. A battery cell manufacturing method, comprising:
forming a plurality of elastic partition members, spaced apart at a prescribed interval, on a tray including a bottom plate and first and second rib sets located on both sides of the bottom plate,
loading battery cells into cell insert parts formed in spaces between elastic partition members adjacent to each other among the plurality of elastic partition members, and
performing a pre-aging process under a state where the elastic partition members press the battery cells.

14. The battery cell manufacturing method of claim 13,
wherein under a state where the elastic partition member presses the battery cell, the level of the electrolyte included in the battery cell rises to be high in a direction opposite to gravity.

15. The battery cell manufacturing method of claim 13,
wherein the prescribed interval between the plurality of elastic partition members is smaller than the thickness of the battery cell before being loaded into the cell insertion part, and when the battery cell is inserted into the cell insertion part, the elastic partition member receives pressure from the battery cell to decrease in thickness, and the elastic partition member presses the battery cell while returning to its original state due to the elasticity.

16. The battery cell manufacturing method of claim 13,
further comprising performing a pre-aging process under a state where the elastic partition member presses the main body of the battery cell in the thickness direction of the battery cell.

17. The battery cell manufacturing method of claim 16,
wherein when the elastic partition member presses the main body of the battery cell, the elastic partition member is in surface contact with the main body of the battery cell.

18. The battery cell manufacturing method of claim 13,
wherein the battery cell comprises an electrode assembly including a positive electrode, a separator, and a negative electrode, and a cell case that packages the electrode assembly.
